## Europäisches Patentamt
## European Patent Office
## Office européen des brevets

(19)

(11) Numéro de publication: **0 158 544**
**B1**

(12) **FASCICULE DE BREVET EUROPÉEN**

(45) Date de publication du fascicule du brevet:
10.08.88

(51) Int. Cl.⁴: **F 16 L 55/16, G 21 C 13/02**

(21) Numéro de dépôt: **85400421.5**

(22) Date de dépôt: **05.03.85**

(54) **Procédé de remplacement d'une manchette montée à l'intérieur d'un conduit et dispositifs de mise en oeuvre de ce procédé.**

(30) Priorité: **08.03.84 FR 8403581**

(43) Date de publication de la demande:
**16.10.85 Bulletin 85/42**

(45) Mention de la délivrance du brevet:
**10.08.88 Bulletin 88/32**

(84) Etats contractants désignés:
**BE CH DE LI SE**

(56) Documents cité:
**DE-A-2 819 388**

**KERNENERGIE, vol. 15, no. 8, août 1972, pages 264-269, Berlin, DE; A. SCHÖNHERR et al.: "Überblick über die Duchführung und die Ergebnisse der teilweisen Reaktorrevision 1971 im Kernkraftwerk Rheinsberg"**

(73) Titulaire: **FRAMATOME ET CIE., Tour Fiat 1, Place de la Coupole, F-92400 Courbevoie (FR)**

(72) Inventeur: **Martin, Alain, 4, rue St. Georges, F-69005 Lyon (FR)**
Inventeur: **Maillard, Philippe, Les Cottages de Marcy rue du Vallon, F-69260 Marcy l'Etoile (FR)**

(74) Mandataire: **Moncheny, Michel, c/o Cabinet Lavoix 2 Place d'Estienne d'Orves, F-75441 Paris Cedex 09 (FR)**

## Description

L'invention concerne un procédé de remplacement d'une manchette montée à l'intérieur d'un conduit et des dispositifs pour la mise en oeuvre de ce procédé.

L'invention s'applique en particulier au remplacement de manchettes thermiques dans les circuits des centrales nucléaires à eau sous pression pour lesquelles de tels remplacements doivent être effectués le plus parfaitement possible, dans le temps le plus court possible et en produisant le minimum de déchets.

Dans ces circuits, certains conduits sont soumis à des chocs thermiques importants, en particulier au voisinage des raccordements entre deux conduits.

A titre d'exemple, il existe une grande différence de température entre le conduit d'alimentation du circuit primaire (température de 300°C et pression de 155 bars (15,5 MPa) et des conduits de retour du fluide primaire dans le circuit primaire, par exemple après prélèvement par le circuit de contrôle volumétrique et chimique (RCV) dont le but est notamment de doser certains adjuvants comme le bore et de déminéraliser l'eau du circuit primaire si besoin est ; la température de ce conduit de retour est d'environ 50°C et sa pression avoisine 5 bars (0,5 MPa).

Il existe également une grande différence de température entre le pressuriseur, qui est un réservoir contenant de l'eau et du gaz et permet de porter la pression du circuit primaire à une pression d'environ 155 bars, et le conduit d'aspersion du pressuriseur qui permet, en abaissant la température du gaz, d'abaisser également la pression fournie par le pressuriseur. Alors que la température du pressuriseur est d'environ 300°C, la température à laquelle est portée le conduit d'aspersion est d'environ 50°C.

La grande différence de température entre deux conduits ou un conduit et le pressuriseur entraine des chocs thermiques très violents au niveau des soudures de raccordement des deux conduits ou du conduit et du pressuriseur. Afin de créer des transitoires, il est connu de prévoir des manchettes thermiques c'est-à-dire une enveloppe cylindrique réalisant une double paroi interne au conduit qui comporte la soudure susceptible d'être soumise aux chocs thermiques. A titre d'exemple, on pourra se reporter au brevet français no. 2.442.361, au nom de la Demanderesse, et qui montre des manchettes thermiques soudées dans le voisinage du raccordement de deux conduits.

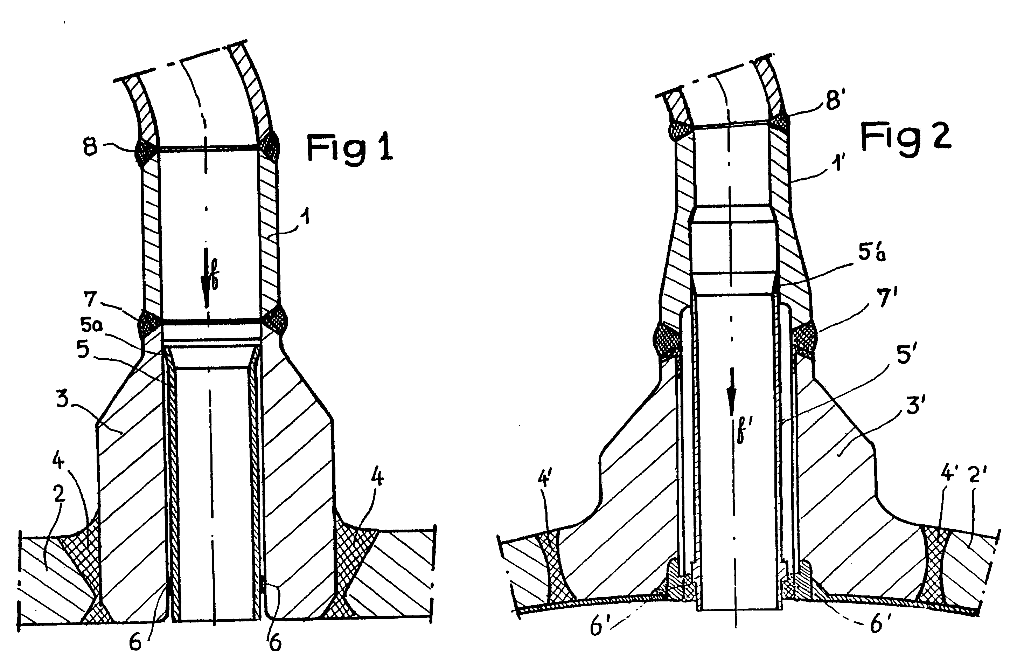

On pourra se reporter également aux figures 1 et 2 de la présente demande, qui montrent des conduits munis de manchettes.

La figure 1 montre le raccordement d'un conduit 1 à un autre conduit 2. Pour effectuer ce raccordement, la conduite 1 a été prolongée par un piquage 3 qui a été soudé sur le conduit 2 en 4. Afin de protéger les soudures 4, une manchette thermique 5 a été soudée en 5a sur le piquage 3.

Les conduits 1 et 2 peuvent être quelconques mais, en particulier, ils peuvent représenter, pour le conduit 1, le conduit de retour du fluide primaire du circuit RCV dans le circuit primaire, et pour le conduit 2, le conduit primaire.

La figure 2 est analogue à la figure 1. Une conduite 1' a été soudée sur une conduite 2'. Dans ce but, la conduite 1' a été prolongée par un piquage 3' qui a été soudé en 4' à la conduite 2'. Sur cette figure, la manchette 5' de protection des soudures 4' a toutefois été soudée en 5'a sur le conduit 1' et non sur le piquage 3'.

Sur les deux figures, la manchette thermique 5 ou 5' est maintenue écartée de la conduite à l'intérieur de laquelle elle est placée au moyen de plots antivibratoires 6 ou 6'.

Les vitesses importantes de circulation du fluide, celui-ci circulant dans le sens indiqué par les flèches f et f' respectivement sur les figures 1 et 2, provoquent des turbulences qui à leur tour génèrent des vibrations qui s'amplifient lors de leur propagation et qui peuvent en outre se trouver en résonance ces vibrations parviennent alors à fissurer les soudures 5a ou 5'a des manchettes 5 ou 5' sur les conduits 1 ou 1'.

Le remplacement de ces manchettes peut s'avérer nécessaire sur les réacteurs nucléaires qui ont été utilisés pendant plusieurs années. L'opération est rendue complexe par le fait que les dispositifs utilisés pour le remplacement des manchettes doivent être automatisés car, d'une part, les sites sont radio-actifs et l'on doit donc limiter au maximum le temps de présence des ouvriers sur ces sites, et d'autre part les réseaux de circuits fluides et électriques sont très denses et rendent difficile l'accès aux conduits à réparer. En outre, il faut éviter que lors du remplacement des manchettes, des débris tels que des copeaux ne tombent dans les conduits et portent ensuite atteinte au fonctionnement correct du réacteur.

C'est pourquoi l'invention a pour but un procédé de remplacement des manchettes thermiques qui soit automatique, rapide et très propre. Elle a également pour but les divers dispositifs de mise en oeuvre de ce procédé.

L'invention concerne un procédé de remplacement d'une manchette montée à l'intérieur d'un conduit, soudée à la paroi intérieure du conduit à l'une de ses extrémités et maintenue écartée de la paroi intérieure du conduit par des plots à l'autre extrémité.

Le procédé selon l'invention consiste à effectuer un double tronçonnage du conduit, l'un au moins de ces deux tronçonnages étant effectué en amont de la soudure de la manchette sur le conduit, à retirer le tronçon ainsi obtenu et la manchette, à usiner des chanfreins aux extrémités libres du conduit, à contrôler la position et la géométrie des plots, à souder dans la portion libre du conduit un nouveau tronçon sur la paroi intérieure duquel a été préalablement soudée l'une des extrémités d'une nouvelle manchette, celle-ci ayant été usinée en fonction de la position et de la géométrie des plots pour qu'un jeu minimal existe entre les plots et l'extrémité libre de la manchette.

Selon une variante particulière du procédé selon l'invention, celui-ci consite à effectuer les deux tronçonnages en amont de la soudure de la manchette sur le conduit et, après avoir retiré le tronçon et avant de retirer la manchette, à éliminer le cordon de soudure de la manchette sur le conduit.

Le procédé selon l'invention est également caractérisé par le fait que l'on réalise chacun des tronçonnages en deux opérations, avec enlèvement de matière, puis par repoussage de la matière, afin d'éviter la pénètration de déchets à l'intérieur du conduit lors du débouchage.

L'invention concerne également un dispositif pour la réalisation de l'opération de tronçonnage avec enlèvement de matière selon le procédé selon l'invention.

Ce dispositif comporte:

- un bâti en deux parties, destiné à être fixé autour de la paroi extérieure du conduit de façon que son axe se confonde avec l'axe du conduit,
- une partie tournante en deux parties portées par les parties du bâti, mobile en rotation autour de l'axe du bâti,
- au moins un support d'outil à tronçonner porté par la partie tournante mais mobile en translation vers l'axe du bâti,
- des moyens pour faire tourner la partie tournante autour de l'axe du bâti,
- des moyens pour faire avancer le support d'outil vers l'axe du bâti,
- des moyens pour arrêter le mouvement d'avance du support d'outil avant que l'outil ne débouche à l'intérieur du conduit.

Dans un mode de réalisation particulier de ce dispositif, les moyens pour faire avancer le support d'outil sont constitués de

- une vis sans fin susceptible d'être entrainée en rotation par une fourchette dont l'extrémité libre est munie d'une roulette susceptible de se déplacer sur une piste circulaire du bâti,
- des moyens placés sur ladite piste pour soulever la roulette à chaque tour effectué par la partie tournante,
- des moyens pour faire tourner la vis sans fin dans un seul sens correspondant à l'avance du support d'outil vers l'axe du bâti.

De préférence, les moyens pour arrêter le mouvement d'avance du support d'outil sont constitués d'un témoin solidaire du support d'outil, d'un détecteur de la position du témoin, fixé au bâti, et de moyens de commande de l'arrêt du mouvement d'avance du support d'outil quand le témoin atteint une position fixée à l'avance.

Selon une variante, les moyens pour arrêter le mouvement d'avance du support d'outil comportent en outre un témoin auxiliaire susceptible d'avancer en même temps que le témoin solidaire du support d'outil, dans la même direction mais dans le sens contraire au sens d'avance du support d'outil, le détecteur étant destiné à détecter la position du témoin auxiliaire.

L'invention concerne aussi un dispositif pour l'usinage des chanfreins aux extrémités libres du conduit, conformément au procédé selon l'invention.

Ce dispositif comporte:

- un bâti muni de moyens pour centrer et bloquer celui-ci à l'intérieur du conduit de façon que son axe se confonde avec celui du conduit,
- un support d'outil monté concentrique autour du bâti, mobile en translation le long de l'axe du bâti et en rotation autour de l'axe du bâti,
- des moyens pour déplacer le support d'outil en translation le long de l'axe du bâti,
- des moyens pour faire tourner le support d'outil autour de l'axe du bâti,
- des moyens pour repérer la position du bâti le long de l'axe du conduit,
- des moyens pour repérer la position du support d'outil le long de l'axe du bâti.

Selon une caractéristique particulière, ce dispositif comporte une cuvette de récupération des déchets destinée à être centrée et bloquée à l'intérieur du conduit et à constituer en outre une butée de profondeur pour l'extrémité inférieure du bâti.

L'invention concerne également un dispositif pour le contrôle de la position et de la géométrie des plots conformément au procédé selon l'invention.

Ce dispositif comporte:

- un bâti muni de moyens pour centrer et bloquer celui-ci à l'intérieur du conduit de façon que son axe se confonde avec l'axe du conduit, et percé d'un canal longitudinal,
- un support placé dans ledit canal de façon que son axe soit confondu avec l'axe du bâti, susceptible de se déplacer à l'intérieur du bâti le long de son axe et mobile en rotation autour de son axe,
- un palpeur placé à l'extrémité du support, susceptible de se déplacer en translation par rapport au support perpendiculairement à l'axe du support au contact des plots à contrôler à l'encontre d'un ressort,
- des moyens pour déplacer le support en translation le long de son axe de façon que le palpeur puisse se déplacer le long de toute la hauteur des plots,
- des moyens pour faire tourner le support autour de son axe de façon que le palpeur puisse se déplacer le long de toute la circonférence du conduit,
- des moyens pour repérer à chaque instant la position du support le long de son axe,
- des moyens pour repérer à chaque instant la position angulaire du support,
- des moyens pour repérer à chaque instant la position du palpeur le long de son axe de déplacement.

Dans un mode préféré de réalisation de ce dispositif, le support est percé d'un canal longitudinal et le palpeur est constitué d'une bille susceptible de se déplacer au contact des plots dans un alésage percé à l'extrémité du support perpendiculairement à l'axe de celui-ci; les moyens pour repérer à chaque instant la position de la bille sont constitués:

- d'une tige placée à l'intérieur du canal et susceptible de coulisser à l'intérieur de celui-ci,
- d'un volet parabolique solidaire de l'extrémité de la tige,
- d'un ressort d'application du volet contre la bille,
- d'un capteur placé à l'extrémité supérieure de la tige pour repérer la position de la tige le long de son axe.

Selon une caractéristique particulière de ce dispositif, les moyens pour faire tourner le support autour de son axe constituent également les moyens pour déplacer le support le long de son axe, le support comportant un filetage extérieur sur une partie de sa longueur à laquelle correspond un filetage intérieur sur le bâti.

L'invention concerne également un dispositif pour l'élimination d'un cordon de soudure conformément à la variante du procédé selon l'invention.

Ce dispositif comporte:

- un bâti destiné à être fixé autour du conduit de façon que son axe se confonde avec l'axe du conduit,
- un support d'outil monté sur le bâti de façon que son axe se confonde avec celui du bâti, mobile en translation le long de son axe et en rotation autour de son axe,
- des moyens pour déplacer le support d'outil le long de son axe,
- des moyens pour faire tourner le support d'outil autour de son axe,
- un porte-outil monté sur le support d'outil et mobile en translation par rapport à celui-ci le long d'un axe perpendiculaire à l'axe du support d'outil,
- des moyens pour déplacer le porte-outil le long de son axe de déplacement,
- des moyens pour repérer les déplacements du support d'outil le long de son axe,
- des moyens pour repérer les déplacements du porte-outil le long de son axe de déplacement,
- des moyens de récupération des déchets d'usinage du cordon de soudure, destinés à être placés en aval du cordon de soudure.

Dans un mode préféré de réalisation de ce dispositif, les moyens de récupération des déchets sont constitués d'un parapluie renversé en caoutchouc gonflable.

Selon une caractéristique particulière de ce dispositif, le parapluie est porté par un suport tubulaire muni de moyens pour centrer celui-ci à l'intérieur de la manchette et percé d'un canal pour le gonflage du parapluie.

Selon une deuxième caractéristique particulière de ce dispositif, celui-ci comporte une tige coaxiale au support tubulaire susceptible de coulisser à l'intérieur de celui-ci et dont l'une des extrémités est fixée au fond d'un fourreau de façon que le parapluie puisse se replier dans le fourreau avant son extraction du conduit.

Mais afin d'être mieux comprise, l'invention va maintenant être décrite de façon plus précise en référence aux dessins annexés qui représentent, uniquement à titre d'exemple, un mode de réalisation préféré des dispositifs selon l'invention.

Les figures 1 et 2 qui ont déjà été décrites ci-dessus représentent chacune, en coupe longitudinale, un conduit porteur d'une manchette thermique que l'on souhaite changer.

Sur la figure 1, la manchette thermique est soudée sur le piquage qui prolonge le conduit porteur de la manchette.

Sur la figure 2, la manchette est soudée sur le conduit lui-même.

La figure 3 représente un dispositif pour la réalisation de l'opération de tronçonnage avec enlèvement de matière, conformément au procédé selon l'invention.

Les figures 4a et 4b représentent un dispositif pour l'usinage des chanfreins aux extrémités libres du conduit, conformément au procédé selon l'invention. La figure 4a représente la partie supérieure de ce dispositif tandis que la figure 4b en représente la partie inférieure.

La figure 5 représente un dispositif pour le contrôle de la position et de la géométrie des plots, conformément au procédé selon l'invention.

Les figures 6a, 6b et 6c représentent un dispositif pour l'élimination du cordon de soudure conformément au procédé selon l'invention.

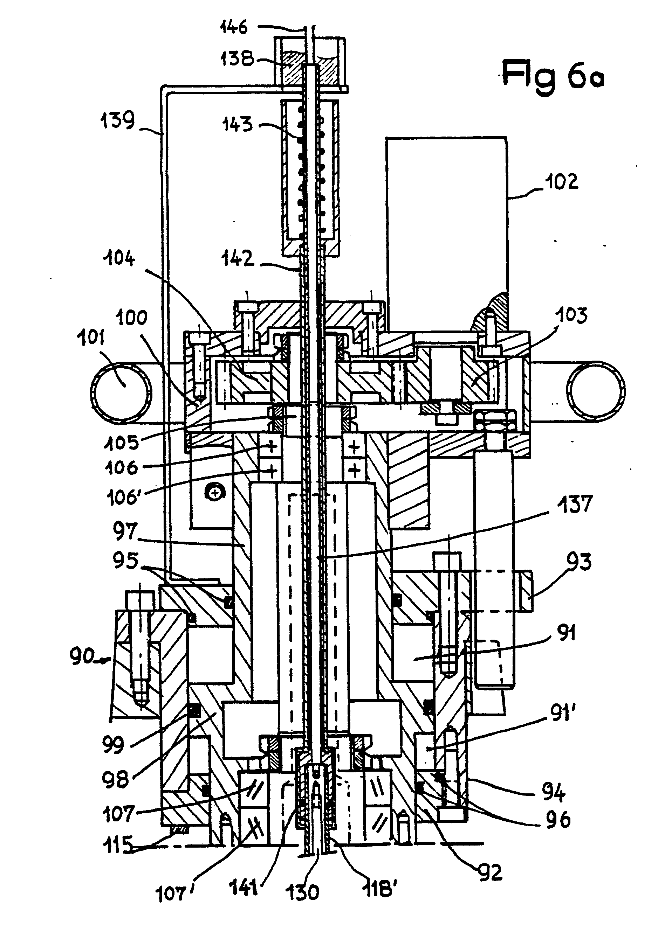

La figure 6a représente le bâti, le porte-outil et le support d'outil, c'est-à-dire la partie supérieure du dispositif.

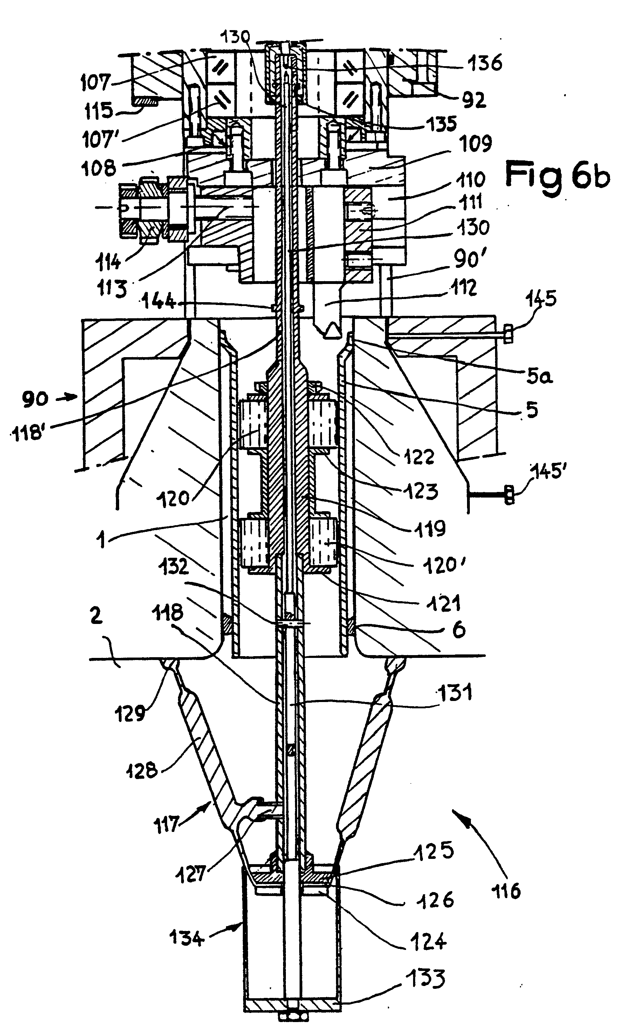

La figure 6b représente le dispositif de récupération des déchets, c'est-à-dire la partie inférieure du dispositif.

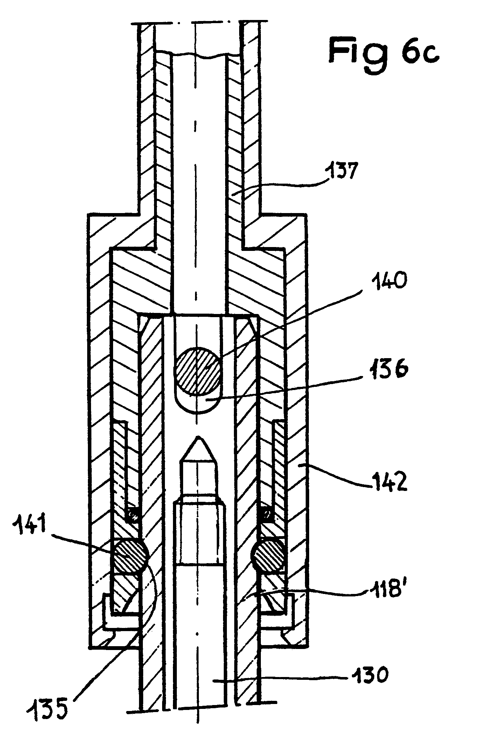

La figure 6c représente, en vue agrandie, le mode de fixation du dispositif de récupération des déchets au bâti.

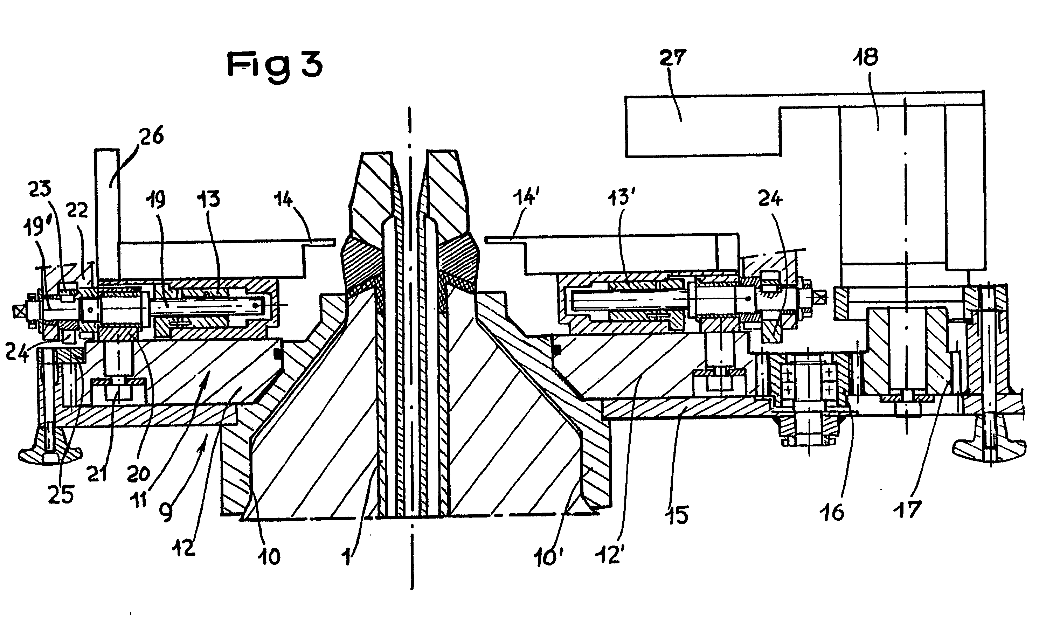

On se reportera tout d'abord à la figure 3.

Cette figure montre un dispositif pour la réalisation de l'opération de tronçonnage avec enlèvement de matière conformément au procédé selon l'invention. Ce dispositif permet d'effectuer un double tronçonnage du conduit 1 ou 1' des figures 1 ou 2. Ces tronçonnages sont effectués par exemple aux niveaux 7 et 8 de la figure 1 ou 7' et 8' de la figure 2; ils sont effectués de préférence au niveau d'une soudure mais peuvent, bien sûr, être effectués à d'autres niveaux sur le conduit 1 ou 1' pourvu que l'on puisse retirer un tronçon de conduit 1 ou 1' suffisant pour pouvoir retirer la manchette, travailler sur le conduit et replacer une autre manchette. L'un au moins de ces tronçonnages doit être effectué en amont de la soudure 5a ou 5'a de la manchette 5 ou 5' sur le conduit 1 ou 1'. Sur la figure 2, un seul des tronçonnages, celui effectué au niveau 8', sera effectué en amont de la soudure 5'a de la manchette 5' sur le conduit 1, le tronçonnage 7' étant effectué en aval de cette soudure 5'a. Lorsqu'on retirera le tronçon obtenu on retirera en même temps la manchette 5'.

Au contraire, sur la figure 1, les deux tronçonnages seront effectués en amont de la soudure 5a de la manchette 5 sur le conduit 1 ; une fois le tronçon obtenu retiré il faudra donc venir usiner le cordon de soudure de la manchette sur le conduit afin de pouvoir retirer la manchette.

Le dispositif de tronçonnage de la figure 3 ne permet en fait de réaliser qu'une seule des deux opérations permettant le tronçonnage des conduits 1 ou 1'. En effet, il est prévu de tronçonner ces conduits en deux opérations, l'une avec enlèvement de matière réalisée au moyen du dispositif de la figure 3 et l'autre par repoussage de la matière réalisée manuellement par exemple à l'aide d'un coupe-tube. La deuxième opération n'intervient que tout-à-fait en fin de tronçonnage et son but est uniquement d'éviter que des déchets ne pénètrent dans le conduit 1 ou 1'.

Le dispositif de la figure 3, permettant la réalisation de l'opération de tronçonnage avec enlèvement de matière comporte un bâti 9 en deux parties 10 et 10' ; ce bâti 9 est destiné à être fixé autour de la paroi extérieure du conduit de façon à ce que son axe se confonde avec l'axe du conduit. On a repéré le conduit par 1 mais celui-ci aurait pu également être repéré par 1', suivant que l'on opère le tronçonnage sur le conduit de la figure 1 ou de la figure 2.

Le dispositif comporte également une partie tournante 11 en deux parties 12 et 12', portées par les parties 10 ou 10' du bâti 9; cette partie tournante 11 est mobile en rotation autour de l'axe du bâti 9.

Le dispositif comporte également deux supports d'outil 13 et 13' portés par la partie tournante 12 mais mobiles en translation par rapport à celle-ci vers l'axe du bâti 9. Les supports d'outil 13 et 13' portent chacun un outil à tronçonner 14 et 14'.

Les deux parties 12 et 12' de la partie tournante 11 sont en fait constituées de deux demi-couronnes dentées assemblées par deux boulons et peuvent tourner librement sur une piste support 15 du bâti 9.

La partie dentée de la partie tournante 11 engrène sur un pignon réducteur 16 qui lui-même est mis en rotation par le pignon d'entrainement 17 d'un moteur hydraulique 18.

Le support d'outil 13 avance vers l'axe du bâti grâce à une vis sans fin 19 tournant dans une bague 20 fixée sur la partie tournante 11 en 21. La vis sans fin 19 se prolonge par un axe 19' qui porte sur deux bagues une fourchette 22 qui ne peut entrainer l'axe 19' en rotation que dans un seul sens grâce à une roue dentée 23 munie d'un cliquet.

L'extrémité libre de la fourchette 22 est munie d'une roulette 24 susceptible de se déplacer sur une piste circulaire 25 du bâti 9.

Des moyens non représentés tels qu'un embrèvement muni d'une butée en forme de "dos d'âne", placés sur la piste circulaire 25, soulèvent la roulette 24 à chaque tour effectué par la partie tournante 11 et donc par la roulette 24. A chaque fois que la roulette 24 est soulevée, elle provoque un pivotement de la fourchette et donc une rotation de l'axe 19' et de la vis sans fin 19. La rotation de la vis sans fin 19 entraine une avance du support d'outil 13. Cette avance, qui se produit de façon régulière, à chaque tour de l'outil, permet de réaliser une saignée circulaire dans le conduit 1.

Afin de prévoir l'arrêt des outils 14 et 14' avant que ces outils ne débouchent dans le conduit 1 et n'introduisent des déchets à l'intérieur du conduit 1, il est prévu des moyens pour arrêter le mouvement d'avance du support d'outil 13 ou 13'. Ces moyens sont constitués d'un témoin 26 solidaire du support d'outil 13, et, fixé au bâti, d'un détecteur 27 de la position du témoin 26. Ce détecteur est, à titre d'exemple, un détecteur photoélectrique. Des moyens non représentés commandent l'arrêt du moteur 18 dès que le témoin a atteint une position déterminée à l'avance en fonction de l'épaisseur du conduit 1 au niveau où on effectue le tronçonnage.

On termine alors l'opération de tronçonnage par un outil à molettes tel qu'un coupe-tube.

Afin d'éviter au maximum toute contamination radio-active du voisinage du conduit 1, on effectuera d'abord les deux prédécoupes usinées au moyen du dispositif selon la figure 3, aux niveaux 7 et 8, et ensuite on terminera les deux tronçonnages aux niveaux 7 et 8 à l'aide du coupe-tube ; l'intérieur du conduit 1 sera donc mis en contact avec l'extérieur seulement à la fin de l'opération de tronçonnage.

Après découpage du tronçon, on retire celui-ci et, dans le cas d'une manchette conforme à la figure 2, on retire en même temps la manchette 5.

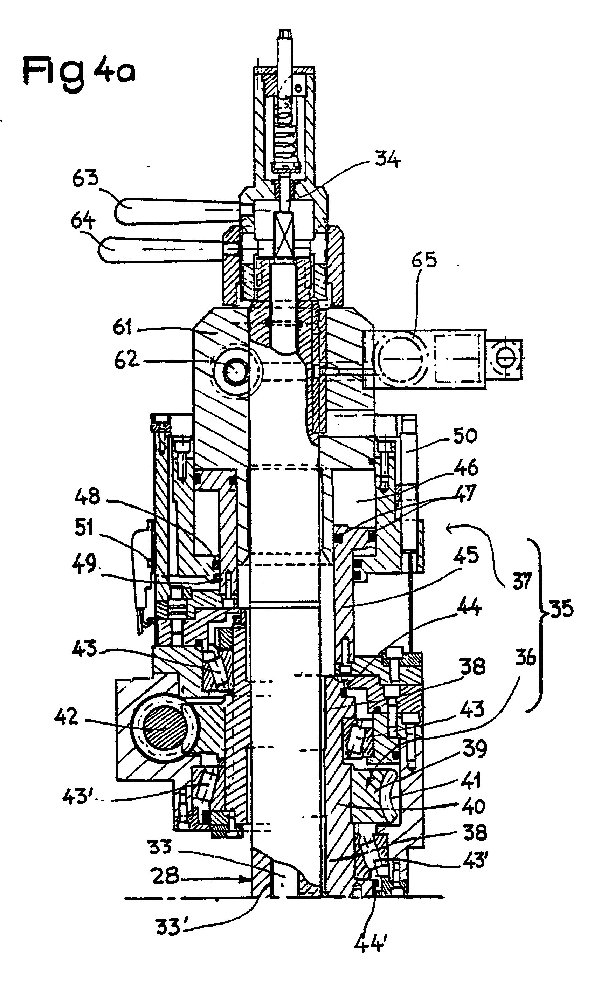

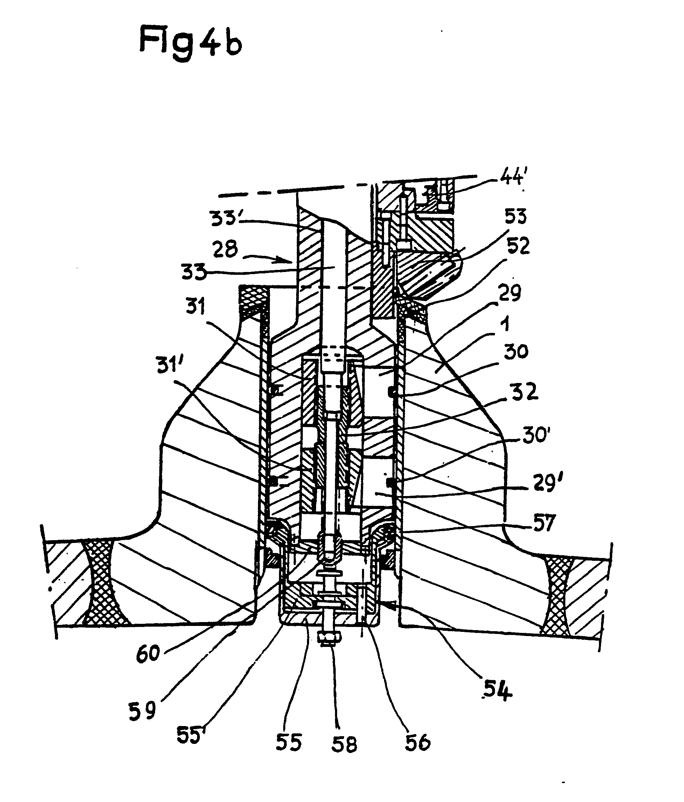

On se reportera maintenant aux figures 4a et 4b. Ces figures représentent un dispositf pour usiner les chanfreins 52 aux extrémités libres du conduit 1 après que l'on ait retiré le tronçon et afin de pouvoir placer correctement un nouveau tronçon.

Ce dispositif comporte un bâti 28 muni de moyens pour centrer et bloquer celui-ci à l'intérieur du conduit 1. Ces moyens de centrage sont constitués d'un double étage de secteurs 29, 29' à 120° maintenus en place par des caoutchoucs 30 et 30'. Des cônes filetés 31 et 31' sont susceptibles d'appliquer les secteurs 29 et 29' contre la paroi interne du conduit 1 et de bloquer ceux-ci ainsi que le bâti 28 à l'intérieur du conduit 1. Les cônes filetés 31 et 31' peuvent être manoeuvrés par un écrou 32 muni de deux filetages inversés, au moyen d'une tige 33 engagée dans un canal axial 33' percé dans le bâti 28 et qui, au niveau de l'écrou 32, comporte six pans mâles susceptibles de coopérer avec un trou six pans réalisé dans l'écrou 32. La tige 33 est en butée à son extrémité supérieure sur un capteur 34 qui permet de détecter la position de la tige 33 donc du bâti 28. Elle est également en butée à son extrémité inférieure dans un palier 59 qui s'appuie sur un boulon 58 d'une cuvette 54 ; cette dernière sert de butée de profondeur au bâti 28 et sera décrite en détail ultérieurement.

Le dispositif comporte également un support d'outil 35 monté concentrique autour du bâti 28, mobile en translation le long de l'axe du bâti 28 et en rotation autour de l'axe du bâti.

Le support d'outil 35 est en fait constitué d'une partie tournante 36 et d'une partie 37 mobile en translation et susceptible d'entraîner dans son mouvement de translation la partie tournante 36.

La partie tournante 36 est montée concentrique sur le bâti 28 avec des bagues auto-lubrifiées 38. Une couronne 39 bloquée à l'intérieur par des cannelures 40 est entrainée en rotation par des dents 41 grâce à moteur hydraulique classique 42 porté par la partie 37.

La partie 37 assure les mouvements de translation verticale de partie 36. Dans ce but, deux roulements à rouleaux 43 et 43' assurent la solidarisation des parties 36 et 37. Ces roulements sont protégés des actions extérieures par des joints à lèvres 44 et 44'.

La partie 37 peut être déplacée en translation verticale au moyen d'un vérin annulaire 45 susceptible de se déplacer le long d'un axe parallèle à l'axe longitudinal du bâti 28 grâce à une chambre de pression 46. L'étanchéité est réalisée par un joint torique 47 d'une part et par un torique 48 et un joint à lèvres 49 d'autre part. Un capteur de déplacement donne les positions en translation de l'ensemble des parties 37 et 36.

Une grenouillère de raccordement 51 permet de bloquer en position haute la partie tournante 36.

La figure 4a représente dans sa partie droite, c'est-à-dire à droite de l'axe du bâti, l'ensemble des parties 36 et 37 en position basse et sur sa partie gauche, c'est-à-dire à gauche de l'axe du bâti, l'ensemble des parties 36 et 37 en position haute.

Lorsque l'on veut usiner le chanfrein 52, on approche l'outil 53 de celui-ci en repérant la position de l'outil 53 par la position en translation du vérin 45 (repérée par le capteur de déplacement 50) et par la position du bâti 28 (repérée par le capteur 34).

Afin d'assurer la récupération des déchets d'usinage du chanfrein 52, on a prévu une cuvette 54 de récupération des déchets. Celle-ci est réalisée en deux parties 55 et 55' coaxiales, pouvant coulisser l'une dans l'autre et emboitées et guidées par un pion de centrage 56. Les rebords des deux parties 55 et 55' délimitent un espace annulaire dans lequel est fixé un joint en caoutchouc 57. Les fonds des deux parties 55 et 55' sont traversés par un boulon 58 dont la tête prend appui sur le fond de la partie supérieure 55' et l'écrou sur le dessous de la cuvette inférieure 55. Par rotation du boulon 58, il y a rapprochement des deux parties 55 et 55' donc des rebords de celles-ci: le joint en caoutchouc 57 s'écrase et vient se plaquer sur la paroi interne du conduit 1 assurant un blocage en position de la cuvette 54 et une bonne étanchéité. La cuvette 54 permet la récupération des déchets d'usinage mais elle sert également de butée de profondeur pour le bâti 28. En effet cette cuvette 54 est destinée à être placée à l'intérieur du conduit 1 avant que le bâti 28 ne soit lui-même centré à l'intérieur du conduit 1. Une fois la cuvette 54 mise en place, le bâti 28 est amené en butée sur la tête du boulon 58 par appui de son palier d'extrémité 59, ce dernier étant relié au corps du bâti 28 par l'intermédiaire d'une pièce 60. L'extrémité de la tige 33 vient se placer à l'intérieur du palier 59. Ainsi la cuvette 54 sert à la fois de butée de profondeur pour le bâti 28 et de dispositif de récupération des déchets d'usinage.

Pour mettre en place le dispositif d'usinage du chanfrein 52, on centre et on bloque tout d'abord la cuvette 54 en agissant sur le boulon 58. On positionne alors le bâti 28 en venant poser le palier 59 sur l'extrémité du boulon 58 et l'on bloque les secteurs 29 contre la paroi interne du conduit 1 en agissant sur la tige 33. On assure ensuite une parfaite solidarité entre la partie du bâti 28 qui est centrée à l'intérieur du conduit 1 et qui contient la tige 33 et un chapeau 61 qui constitue la partie supérieure du bâti. Un blocage de sécurité en rotation entre le chapeau 61 et la partie inférieure du bâti 28 est effectué au moyen d'un levier manuel 62. Quant aux leviers 63 et 64, ils maintiennent le chapeau 61 sur la partie inférieure du bâti grâce à un système écrou contre-écrou. Le repère 65 désigne les commandes hydrauliques du vérin 45.

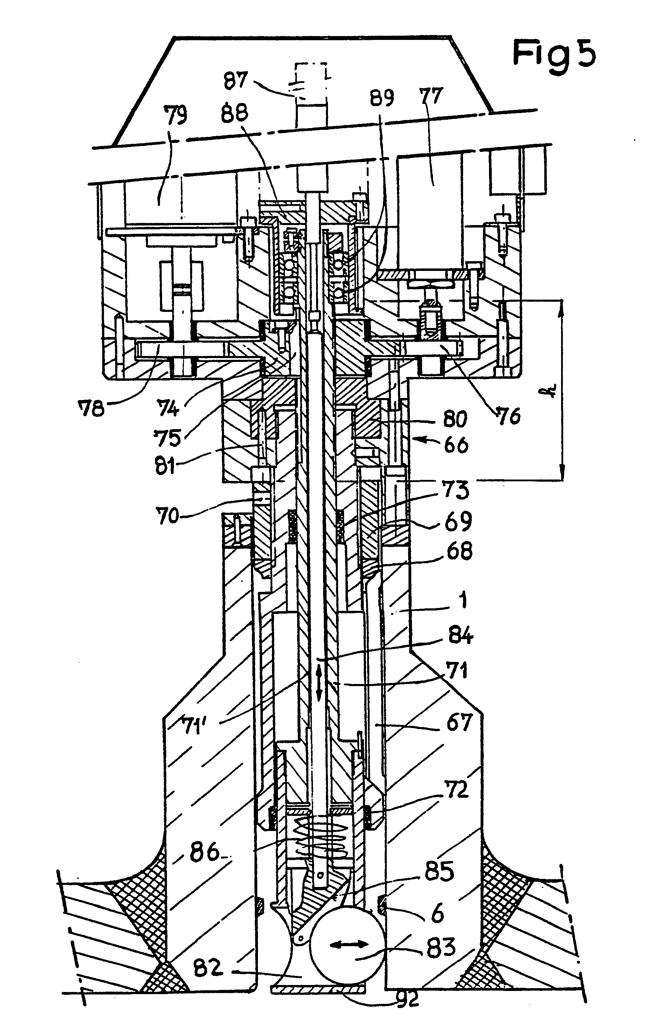

On se reportera maintenant à la figure 5 qui montre un dispositif de contrôle de la position et de la géomètrie des plots que l'on a repérés ici par 6 (comme sur la figure 1) mais le dispositif serait le même pour le contrôle des plots 6' de la figure 2.

Le contrôle des plots anti-vibratoires est en effet nécessaire afin de définir avec exactitude leur géométrie et leur position, la condition du moindre encombrement étant toujours maintenue. La nouvelle manchette que l'on viendra souder à la place de la manchette 5 que l'on a retirée sera usinée en fonction de la position et de la géométrie des plots 6 pour qu'un jeu minimal existe entre les plots 6 et l'extrémité libre de la manchette.

Le dispositif de contrôle comporte un bâti 66 muni de moyens pour centrer et bloquer celui-ci à l'intérieur du conduit 1 de façon à ce que son axe se confonde avec l'axe du conduit 1. Ces moyens de centrage sont constitués par trois secteurs 67 à 120° qui sont manoeuvrés par des coins 68 afin de venir s'appliquer contre la paroi intérieure du conduit 1. Les coins 68 sont liés à un écrou 69 qui peut être mis en rotation au moyen de pions amovibles que l'on enfonce dans des trous borgnes 70 et qui servent de bras de manoeuvre.

Le bâti 66 est percé d'un canal longitudinal dans lequel est placé un support 71 de façon que son axe soit confondu avec l'axe du bâti 66. Ce support 71 est susceptible de se déplacer à l'intérieur du bâti 66 le long de son axe et est mobile en rotation autour de son axe. Des bagues autolubrifiées 72 et 73 permettent au support 71 de glisser sans frottement à l'intérieur du bâti 66.

Une roue dentée 74 solidaire du support 71 par une clavette 75 est entrainée en rotation par un pignon d'entrainement 76 d'un moteur 77. Un pignon 78 diamètralement opposé au pignon 76 engrène également sur la roue dentée 74 et est relié à un codeur 79. Ainsi le moteur 77 permet de faire tourner le support 71 et le codeur 79 enregistre chaque tour effectué par le support 71.

D'autre part le support 71 est fileté sur une hauteur h et ce filetage visse dans un écrou 80 centré par un pion 81. Ainsi, quand le moteur 77 tourne, il entraine non seulement le support 71 en rotation, mais il entraine également celui-ci en translation. A chaque tour qu'il effectue le support 71 se déplace d'une certaine hauteur qui est la même à chaque tour et est enregistrée en même temps que le nombre de tours par le codeur 79. Le codeur 79 permet donc à chaque instant de repérer la position du support 71 le long de son axe et la position angulaire du support 71.

A l'extrémité du support 71 est percé un alésage 82 dans lequel est susceptible de se déplacer, perpendiculairement à l'axe du support 71, une bille 83. Le diamètre de l'alésage 82 est bien sûr inférieur au diamètre de la bille 83 ; il autorise une saillie de la bille 83 à l'extérieur du support 71 de sorte que la bille 83 puisse se trouver en contact avec ces plots 6 et se déplacer au contact de ceux-ci.

Les moyens pour repérer la position de la bille 83 le long de son axe de déplacement c'est-à-dire le long de l'axe de l'alésage 82, sont constitués d'une tige 84 placée dans un canal 71' percé à l'intérieur du support 71 et susceptible de coulisser à l'intérieur de ce canal, d'un volet 85 parabolique solidaire de l'extrémité de la tige 84 et d'un ressort 86 d'application du volet 85 contre la bille 83. Un capteur 87 placé à l'extrémité supérieure de la tige 84 permet de repérer les déplacements du volet 85 et par conséquent la position de la bille 83 le long de son axe de déplacement.

Afin que le palpeur 87 ne repère que les déplacements de la bille 83 le long de son axe et ne repère pas les déplacements de la tige 84 quand celle-ci se déplace en même temps que le support 71, il est nécessaire que le palpeur 87 se déplace en même temps que le support 71. Ainsi le capteur 87 est entrainé en translation par la pièce 88 qui est entrainée elle-même en translation en même temps que le support 71 mais est désolidarisée en rotation du support 71 au moyen de roulements 89.

Le dispositif de la figure 5 permet donc de faire décrire à la bille 83 une hélice et de balayer ainsi le conduit 1 sur toute sa circonférence et les plots 6 sur toute leur hauteur et d'associer à chaque position de la bille 83 sur cette hélice l'enfoncement de la bille 83 au contact des plots 6.

Une fois le contrôle des plots effectué, on réalise un tronçon destiné à être soudé à la place du tronçon qui a été retiré et l'on soude sur ce tronçon une nouvelle manchette en fonction de la géométrie et de la position des plots, de façon que l'extrémité libre de la manchette vienne au contact des plots 6 avec un jeu minimum.

Même si le double tronçonnage a été effectué en amont de la soudure 5a de la manchette 5 sur le conduit 1, comme dans le cas de la figure 1, en raison de l'endroit où la manchette avait été soudée initialement lors de la fabrication du réacteur, la manchette de remplacement sera soudée sur le tronçon que l'on rapporte pour remplacer le tronçon retiré.

Pour mettre en place le nouveau tronçon, on procède d'abord à l'accostage de celui-ci sur le conduit 1 au moyen d'un dispositif classique du type "chaîne d'accostage" que l'on monte fixe sur l'une des portions du conduit 1 tandis que des prolongateurs munis de trois vis à 120° centrent le nouveau tronçon. Cet accostage est suivi d'une mise en protection interne de gaz neutre. Un dispositif avec un ballon gonflable et un bouchon supportant l'alimentation en gaz isole la portion intérieure du conduit 1 dans laquelle devra s'effectuer la première soudure. Le pointage est effectué manuellement. Le soudage est effectué par une machine possédant une pince dont l'ouverture est adaptée au profil du conduit 1. Le type de soudage est du type "TIG" orbital avec métal d'apport. Le suivi de ces opérations est réalisé à distance par fibres optiques et système vidéo.

Nous venons de décrire l'ensemble des opérations permettant de remplacer une manchette ; il nous reste toutefois à décrire le dispositif pour l'usinage d'un cordon de soudure tel que le cordon 5a de soudure de la manchette 5 sur le piquage 3 (figure 1). Ce dispositif est représenté sur les figures 6a, 6b et 6c.

Le dispositif pour l'élimination du cordon de soudure 5a comporte un bâti 90 destiné à être fixé autour du conduit 1 de façon que son axe se confonde avec l'axe du conduit 1. Le blocage du bâti 90 sur le conduit 1 est effectué par deux séries 145 et 145' de quatre vis à 90°. Le corps du bâti 90 se prolonge par une colonne de maintien 90' sur laquelle est fixée une chambre de pression double 91 et 91' multi-éléments 92, 93, 94 assemblés entre eux par des vis ; l'étanchéité entre ces éléments est réalisée par des joints toriques, supérieur 95 et inférieur 96.

Un vérin 97 est constitué d'un cylindre creux sur lequel est usinée une surépaisseur 98 reprenant les divers efforts des pressions variables exercées au niveau des chambres 91 et 91' et est muni d'un joint torique 99 pour assurer l'étanchéité.

L'ensemble du corps de vérin 97 est surmonté par un carter 100 avec couronne de manutention 101.

Un moteur 102 est vissé sur le carter 100 et son pignon d'entrainement 103 engrène sur un pignon 104 qui est bloqué par des écrous contre-écrous sur un arbre 105 qui constitue un support d'outil.

Le guidage de l'arbre 105 est réalisé, en sortie du carter 100 et en partie supérieure du vérin 91, à l'aide de deux roulements 106 et 106' et en partie inférieure à l'aide de deux roulements à rouleaux 107 et 107' bloqués par un écrou contre-écrou. Le joint à lèvres 108 empêche la pénétration des poussières au niveau des paliers à roulement.

Le support d'outil 105 est donc susceptible de se mouvoir en translation au moyen du vérin 97 et en rotation grâce au moteur 102.

Un porte-outil 109 est fixé sur le support d'outil 105. La partie maîtresse du porte-outil 109 prend la forme d'une platine de guidage dont la rainure 110 autorise des déplacements d'un chariot 111 dans un sens perpendiculaire à l'axe longitudinal du bâti 90.

Un outil de coupe 112 est bloqué sur le chariot 111. Le chariot 111 est d'autre part muni d'un alésage fileté dans lequel tourne une vis 113 qui permet par rotation d'un galet 114 fixé sur cette vis 113 un déplacement du chariot 111. En effet, un patin fixe 115 solidaire du bâti 90 vient en contact avec un chemin de roulement du galet 114 en position de course haute du vérin 97 par rapport au bâti 90.

L'ensemble du porte-outil 109, du support d'outil 105 et du carter supérieur 100 est alésé sur toute sa hauteur pour laisser le passage à un dispositif permettant la récupération des copeaux et qui est représenté sur la figure 6b. Ce dispositif est constitué d'un parapluie renversé 116 lui-même constitué d'une corolle en caoutchouc 117 munie de boudins gonflables 128 et 129. Cette corolle 117 est renversée avec pointe en bas et est suspendue à un support tubulaire constitué d'un premier tube 118 soudé à l'extrémité d'un deuxième tube 118'.

Ce dernier possède une surépaisseur 119 à un niveau tel que cette surépaisseur se trouve au milieu de la hauteur de la manchette 5 une fois que le parapluie 116 est positionné.

Deux cylindres creux en caoutchouc 120 et 120' dont le diamètre intérieur est celui de la surépaisseur 119 sont bloqués en partie basse par la partie terminale du tube 118' en forme de disque 121 et par un écrou avec rondelle 122 en partie haute, et sont séparés l'un de l'autre par une entretoise 123. Ces cylindres permettent de centrer le tube 118' à l'intérieur de la manchette 5.

Le tube 118 est, à sa partie inférieure, soudé à une pièce 124 munie d'un filetage sur lequel vient se visser un écrou 125 de façon à serrer entre les pièces 124 et 125 la partie inférieure de la corolle 117.

Les tubes 118 et 118' sont percés à l'intérieur de façon à permettre le passage d'un gaz de la partie supérieure du tube 118' jusqu'à un conduit 127 qui débouche dans la corolle 117 pour gonfler les boudins 128 et 129. Le boudin 128 assure une certaine rigidité à la corolle 117 tandis que le boudin 129 assure le positionnement vertical de la corolle 117 et l'étanchéité entre le parapluie 116 et les parois du conduit contre lesquelles il est appliqué.

Pour la mise en place du parapluie 116 dans le conduit 1, on procède d'abord au gonflage de la corolle afin que celle-ci se mette dans une position correcte et l'on procède ensuite à l'écrasement des caoutchoucs 120 et 120' à l'intérieur du conduit 1 en agissant sur l'écrou 122.

Dans le canal percé dans les tubes 118 et 118' peut coulisser une tige 130 dont le diamètre extérieur est suffisamment inférieur au diamètre intérieur des tubes 118 et 118' pour qu'un espace suffisant entre la tige 130 et la paroi interne de ces tubes permette le passage du gaz de gonflage de la corolle 117. La tige 130 peut coulisser à l'intérieur du tube 118 sur la hauteur d'une lumière 131 ménagée dans la tige 130 et dont les extrémités viennent buter contre une goupille 132 fixée sur le tube 118.

L'extrémité inférieure de la tige 130 est fixée sur le fond 133 d'un fourreau 134. Ainsi, quand la fenêtre 131 est en contact par son extrémité supérieure avec la goupille 132, le fourreau 134 est en position basse et quand la fenêtre 131 est en contact avec la goupille 132 par son extrémité inférieure, le fourreau se trouve en position relevée et, après avoir été dégonflée, la corolle 117 peut se replier à l'intérieur de ce fourreau, ce qui permet son extraction du conduit 1 en fin d'opération.

L'extrémité supérieure du tube 118 est munie d'une rainure circulaire 135 et d'une fente 136, qui permettent de fixer le tube 118 à un tube 131 solidaire du bâti 90 (voir figure 6a).

Le tube 131 est bloqué par une résine 138 sur une entretoise en U 139 qui s'appuie sur le bâti 90.

La liaison entre le tube 118 et le tube 131 s'effectue de la façon suivante: la fente 136 vient coopérer avec une goupille 140 (voir figure 6c) fixée sur le tube 137, assurant ainsi un blocage en rotation du tube 118 dans le cas d'une défaillance de la fixation du tube 118 par les caoutchoucs 120 et 120' ; des billes 141 prennent appui dans la rainure 135 sous l'action d'un manchon 142 poussé par un ressort 143, ce qui assure un blocage vertical.

La mise en place du dispositif d'usinage et du parapluie de récupération des débris comprend les phases suivantes:

Le parapluie 116 est d'abord mis en place comme suit: on introduit manuellement le parapluie 116 suspendu au tube 118' dans le conduit 1 jusqu'à ce que des ergots 144 du tube 118' (voir figure 6b) se trouvent au niveau de l'entrée du conduit 1. On place alors une source de gaz à l'extrémité supérieure du tube 118'. Le gaz vient gonfler la corolle 117 qui vient prendre appui sur la surface interne du conduit. Dans le cas particulier de la figure 6b, cette corolle vient prendre appui sur la paroi interne du conduit 2 dans lequel débouche le conduit 1. On serre alors l'ensemble écrou-rondelle 122, ce qui a pour effet direct d'écraser les cylindres de caoutchouc 120 et 120' et de bloquer le dispositif dans la manchette 5. Le parapluie 116 est alors centré et bloqué de façon correcte. On dégonfle alors la corolle 117 et on retire l'alimentation en gaz.

On met ensuite en place le bâti 90 qui prend appui sur le conduit 1 et se centre grâce aux vis 145 et 145'.

Pendant que l'on met en place le bâti 90, la liaison entre le tube 118' et le tube 137 s'effectue comme décrit plus haut, au moyen de la rainure 135 et de la fente 136.

On branche alors la prise de gaz à l'extrémité supérieure 146 du tube 137.

On gonfle la corolle 117.

Le dispositif est alors prêt à éliminer le cordon de soudure 147.

Les prises de passe en diamètre sont déterminées par le nombre de tours effectués par le galet 114 sur le patin 115, quand le porte-outil 109 et donc le vérin 97 sont en position haute. Les passes sont réalisées de haut en bas par déplacement du vérin 97 en vitesse lente. Les déplacements du vérin 97 pour amener le porte-outil 109 en position haute sont, eux, réalisés en vitesse rapide.

Après élimination complète du cordon de soudure, on retire le bâti 90 puis le parapluie 116 en dévissant l'écrou 122 puis en tirant vers le haut la tige 130 afin que la corolle 117 se replie dans le fourreau 134. On peut alors retirer la manchette 5 et procéder ensuite au contrôle dimensionnel des plots 6 comme décrit plus haut.

L'invention que nous venons de décrire présente de nombreux avantages.

Elle permet de procéder au remplacement des manchettes thermiques dans un temps limité et sans introduire de débris dans le conduit 1. L'invention permet d'effectuer le remplacement des manchettes même dans des conduits difficiles d'accès et dans des conduits en milieu radio-actif. Elle permet de remplacer tout type de manchette, même s'il est difficile de découper dans le conduit 1 un tronçon dont les extrémités sont situées de part et d'autre de la soudure de la manchette sur le tronçon, comme sur la figure 1.

Le dispositif de tronçonnage pourrait ne comporter qu'un porte-outil et donc qu'un outil 14.

D'autre part, les moyens pour arrêter le mouvement d'avance du support d'outil 13 ou 13', avant que l'outil 14 ou 14' ne débouche à l'intérieur du conduit 1, pourraient être différents ils pourraient comporter outre le témoin 26, un témoin auxiliaire susceptible d'avancer en même temps que le témoin 26, dans la même direction que ce témoin 26 mais dans le sens contraire au sens d'avance du support d'outil 13 ; le détecteur 27 détecterait alors la position du témoin auxiliaire et non celle du témoin 26 ; ce détecteur serait moins encombrant puisqu'il serait placé de l'autre côté du porte-outil 13 par rapport au conduit 1.

Le détecteur 26 et le détecteur auxiliaire pourraient être réalisés sous la forme de deux crémaillères inversées dont l'une prépositionnée par rapport au conduit 1 et l'autre prépositionnée par rapport au détecteur 27.

## Revendications

1. Procédé de remplacement d'une manchette montée à l'intérieur d'un conduit, soudée à la paroi intérieure du conduit à l'une de ses extrémités et maintenue écartée de la paroi intérieure du conduit par des plots à l'autre extrémité,
caractérisé par le fait que:
- on effectue un double tronçonnage du conduit (1, 1'), l'un au moins de ces deux tronçonnages étant effectué en amont de la soudure (5a, 5'a) de la manchette (5, 5') sur le conduit (1, 1'),
-on retire le tronçon ainsi obtenu et la manchette (5, 5'),
-on usine des chanfreins aux extrémités libres du conduit (1, 1'),
-on contrôle la position et la géométrie des plots (6, 6'),
- on soude dans la portion libre du conduit (1, 1') un nouveau tronçon sur la paroi intérieure duquel a été préalablement soudée l'une des extrémités d'une nouvelle manchette (5, 5'), celle-ci ayant été usinée en fonction de la position et de la géométrie des plots (6, 6') pour qu'un jeu minimal existe entre les plots (6, 6') et l'extrémité libre de la manchette (5, 5').

2. Procédé selon la revendication 1, caractérisé par le fait qu'on effectue les deux tronçonnages en amont de la soudure de la manchette (5) sur le conduit (1) et qu'après avoir retiré le tronçon et avant de retirer la manchette (5), on élimine le cordon de soudure de la manchette (5) sur le conduit (1).

3. Procédé selon l'une des revendications 1 ou 2, caractérisé par le fait qu'on réalise chacun des tronçonnages en deux opérations, avec enlèvement de la matière, puis par repoussage de la matière, afin d'éviter la pénétration de déchets à l'intérieur du conduit (1, 1') lors du débouchage.

4. Dispositif pour la réalisation de l'opération de tronçonnage avec enlèvement de matière selon la revendication 3,
caractérisé par le fait qu'il comporte:
-un bâti (9) en deux parties (10, 10') destiné à être fixé autour de la paroi extérieure du conduit (1) de façon que son axe se confonde avec l'axe du conduit (1),
-une partie tournante (11) en deux parties (12, 12') portées par les parties (10, 10') du bâti (9), mobile en rotation autour de l'axe du bâti (9),
- au moins un support (13, 13') d'outil à tronçonner (14, 14') porté par la partie tournante (11) mais mobile en translation vers l'axe du bâti (9),
- des moyens (18, 17, 16) pour faire tourner la partie tournante (11) autour de l'axe du bâti (9),
- des moyens (19, 19') pour faire avancer le support d'outil (13, 13') vers l'axe du bâti (9),
- des moyens (26, 27) pour arrêter le mouvement d'avance du support d'outil (13, 13') avant que l'outil (14, 14') ne débouche à l'intérieur du conduit (1).

5. Dispositif selon la revendication 4, caractérisé par le fait que les moyens pour faire avancer le support d'outil (13, 13') sont constitués de:

- une vis sans fin (19) susceptible d'être entrainée en rotation par une fourchette (22) dont l'extrémité libre est munie d'une roulette (24) susceptible de se déplacer sur une piste circulaire (25) du bâti (9),

- des moyens placés sur ladite piste pour soulever la roulette (24) à chaque tour effectué par la partie tournante (11),

- des moyens (23) pour faire tourner la vis sans fin (19) dans un seul sens correspondant à l'avance du support d'outil (13, 13') vers l'axe du bâti (9).

6. Dispositif selon l'une des revendications 4 ou 5, caractérisé par le fait que les moyens pour arrêter le mouvement d'avance du support d'outil (13, 13') sont constitués d'un témoin (26) solidaire du support d'outil (13), d'un détecteur (27) de la position du témoin (26) fixé au bâti (9), et de moyens de commande de l'arrêt du mouvement d'avance du support d'outil (13, 13') quand le témoin (26) atteint une position fixée à l'avance.

7. Dispositif selon la revendication 6, caractérisé par le fait que lesdits moyens d'avance comportent en outre un témoin auxiliaire susceptible d'avancer en même temps que le témoin (26) solidaire du support d'outil (13), dans la même direction mais dans le sens contraire au sens d'avance du support d'outil (13), le détecteur (27) étant destiné à détecter la position du témoin auxiliaire.

8. Dispositif pour l'usinage des chanfreins aux extrémités libres du conduit, selon la revendication 1, caractérisé par le fait qu'il comporte:

- un bâti (28) muni de moyens (29) pour centrer et bloquer celui-ci à l'intérieur du conduit (1) de façon que son axe se confonde avec celui du conduit (1),

- un support d'outil (35) monté concentrique autour du bâti (28), mobile en translation le long de l'axe du bâti (28) et en rotation autour de l'axe du bâti (28),

- des moyens (45) pour déplacer le support d'outil (35) en translation le long de l'axe du, bâti (28),

- des moyens (42) pour faire tourner le support d'outil (35) autour de l'axe du bâti (28),

- des moyens (34) pour repérer la position du bâti (28) le long de l'axe du conduit (1),

- des moyens (50) pour repérer la position du support d'outil (35) le long de l'axe du bâti (28).

9. Dispositif selon la revendication 8, caractérisé par le fait qu'il comporte une cuvette (54) de récupération des déchets destinée à être centrée et bloquée à l'intérieur du conduit (1) et à constituer en outre une butée de profondeur pour l'extrémité inférieure du bâti (28).

10. Dispositif par le contrôle de la position et de la géométrie des plots, selon la revendication 1, caractérisé par le fait qu'il comporte

- un bâti (66) muni de moyens (67) pour centrer et bloquer celui-ci à l'intérieur du conduit (1) de façon que son axe se confonde avec l'axe du conduit (1), et percé d'un canal longitudinal,

- un support (71) placé dans ledit canal de façon que son axe se confonde avec l'axe du bâti (67) susceptible de se déplacer à l'intérieur du bâti (67) le long de son axe et mobile en rotation autour de son axe,

- un palpeur (83) placé à l'extrémité du support, susceptible de se déplacer en translation par rapport au support (67) perpendiculairement à l'axe du support (67) au contact des plots (6) à contrôler à l'encontre d'un ressort (86),

- des moyens (77) pour déplacer le support (71) en translation le long de son axe de façon que le palpeur (83) puisse se déplacer le long de toute la hauteur des plots (6),

- des moyens (77) pour faire tourner le support (71) autour de son axe de façon que le palpeur (83) puisse se déplacer le long de toute la circonférence du conduit (1),

- des moyens (79) pour repérer à chaque instant la position du support (71) le long de son axe,

- des moyens (79) pour repérer à chaque instant la position angulaire du support (71),

- des moyens (84-87) pour repérer à chaque instant la position du palpeur (83) le long de son axe de déplacement.

11. Dispositif selon la revendication 10, caractérisé par le fait que le support (71) est percé d'un canal longitudinal, que le palpeur est constitué d'une bille (83) susceptible de se déplacer au contact des plots (6) dans un alésage percé à l'extrémité du support (71) perpendiculairement à l'axe de celui-ci et que les moyens pour repérer à chaque instant la position de la bille (83) sont constitués:

- d'une tige (84) placée à l'intérieur du canal et susceptible de coulisser à l'intérieur du canal,

- d'un volet (85) parabolique solidaire de l'extrémité de la tige (84),

- d'un ressort (86) d'application du volet (85) contre la bille (83),

- d'un capteur (87) placé à l'extrémité supérieure de la tige (84) pour repérer la position de la tige (84) le long de son axe.

12. Dispositif selon l'une des revendications 10 ou 11, caractérisé par le fait que les moyens pour faire tourner le support (71) autour de son axe constituent également les moyens pour déplacer le support (71) le long de son axe, le support (71) comportant un filetage extérieur sur une partie h de sa longueur à laquelle correspond un filetage intérieur (80) sur le bâti.

13. Dispositif pour l'élimination du cordon de soudure selon la revendication 2, caractérisé par le fait qu'il comporte :

- un bâti (90) destiné à être fixé autour du conduit (1) de façon que son axe se confonde avec l'axe du conduit (1),
- un support d'outil (105) monté sur le bâti (90) de façon que son axe se confonde avec l'axe du bâti (90), mobile en translation le long de son axe et en rotation autour de son axe,
- des moyens (97) pour déplacer le support d'outil (105) le long de son axe,
- des moyens (102) pour faire tourner le support d'outil autour de son axe,
- un porte-outil (109) monté sur le support d'outil (105) et mobile en translation par rapport à celui-ci le long d'un axe perpendiculaire à l'axe du support d'outil (105),
des moyens (113, 114) pour déplacer le porte-outil (109) le long de son axe de déplacement,
- des moyens pour repérer les déplacements du support d'outil (105) le long de son axe,
- des moyens pour repérer les déplacements du porte-outil (109) le long de son axe de déplacement,
- des moyens (116) de récupération des déchets d'usinage du cordon de soudure (147), destinés à être placée en aval du cordon de soudure (147).

14. Dispositif selon la revendication 13, caractérisé par le fait que les moyens de récupération des déchets sont constitués d'un parapluie renversé en caoutchouc gonflable (116).

15. Dispositif selon la revendication 14, caractérisé par le fait que le parapluie (116) est porté par un support tubulaire (118, 118') munie de moyens (120, 120') pour centrer celui-ci à l'intérieur de la manchette (5) et percée d'un canal pour le gonflage du parapluie (116).

16. Dispositif selon la revendication 15, caractérisé par le fait qu'il comporte une tige (130) coaxiale au support tubulaire (118, 118'), susceptible de coulisser à l'intérieur de celui-ci et dont l'une des extrémités est fixée sur le fond (133) d'un fourreau (134) de façon que le parapluie (116) puisse se replier dans le fourreau (134) avant son extraction du conduit (1).

**Patentansprüche**

1. Verfahren zum Ersetzen einer im Inneren einer Leitung angebrachten Hülse, die an die Innenwand der Leitung an einem ihrer Enden geschweißt und von der Innenwand der Leitung durch Klötze am anderen Ende im Abstand gehalten ist,
dadurch gekennzeichnet, daß
- ein doppeltes Abtrennen der Leitung (1, 1') ausgeführt wird, wobei wenigstens eine dieser beiden Abtrennungen stromaufwärts der Schweißverbindung (5a, 5'a) der Hülse (5, 5') auf der Leitung (1, 1') ausgeführt wird,
- das so erhaltene Teilstück und die Hülse (5, 5') herausgezogen werden,
- Fasen an den freien Enden der Leitung (1, 1') maschinell bearbeitet werden,
- die Position und die Geometrie der Klötze (6, 6') kontrolliert werden,
- im freien Abschnitt der Leitung (1, 1') auf der Innenwand ein neues Teilstück angeschweißt wird, von dem zuvor eines der Enden einer neuen Hülse (5, 5') geschweißt worden ist, wobei diese in Abhängigkeit von der Position und der Geometrie der Klötze (6, 6') maschinell bearbeitet worden ist, damit zwischen den Klötzen (6, 6') und dem freien Ende der Hülse (5, 5') ein minimales Spiel vorhanden ist.

2. Verfahren nach Anspruch 1, dadurch gekennzeichnet, daß die beiden Abtrennungen stromaufwärts der Schweißverbindung der Hülse (5) auf der Leitung (1) ausgeführt werden und daß der Schweißwulst der Hülse (5) auf der Leitung (1) entfernt wird, nachdem das Teilstück herausgezogen worden ist und bevor die Hülse (5) herausgezogen wird.

3. Verfahren nach einem der Ansprüche 1 oder 2, dadurch gekennzeichnet, daß jede der Abtrennungen in zwei Arbeitsgängen, mit Abheben des Materials, dann durch Zurücktreiben des Materials durchgeführt wird, um das Eindringen von Abfällen in das Innere der Leitung (1, 1') zur Zeit der Öffnung zu vermeiden.

4. Vorrichtung zur Durchführung des Abtrennarbeitsganges mit Abheben von Material nach Anspruch 3,
dadurch gekennzeichnet, daß sie umfaßt:
- ein Traggestell (9) aus zwei Teilen (10, 10'), das zur Befestigung um die Außenwand der Leitung (1) herum bestimmt ist derart, daß sich seine Achse mit der Achse der Leitung (1) vereinigt,
- einen in Rotation um die Achse des Traggestells (9) beweglichen Drehteil (11) aus zwei Teilen (12, 12'), die durch die Teile (10, 10') des Traggestells (9) getragen sind,
- wenigstens einen Träger (13, 13') für Abtrennwerkzeug (14, 14'), der durch den Drehteil (11) getragen, aber in Translation zur Achse des Traggestells (9) beweglich ist,
- Mittel (18, 17, 16), um den Drehteil (11) um die Achse des Traggestells (9) in Drehung zu versetzen, Mittel (19, 19'), um den Werkzeugträger (13, 13') zur Achse des Traggestells (9) in Vorwärtsbewegung zu versetzen,
- Mittel (26, 27) zum Anhalten der Vorwärtsbewegung des Werkzeugträgers (13, 13'), bevor das Werkzeug (14, 14') in das Innere der Leitung (1) mündet.

5. Vorrichtung nach Anspruch 4, dadurch gekennzeichnet, daß die Mittel zum Versetzen des Werkzeugträgers (13, 13') in Vorwärtsbewegung gebildet sind durch:
- eine Endlosschraube (19), die in Rotation durch eine Gabel (22) mitnehmbar ist, deren freies Ende mit einer Walze (24) versehen ist, die sich auf einer Kreisbahn (25) des Traggestells (9) verschieben kann,
- auf der Bahn angeordnete Mittel zum Heben der Walze (24) bei jeder durch den Drehteil (11) bewirkten Umdrehung,
- Mittel (23), um die Endlosschraube (19) in einer einzigen Richtung entsprechend der Vorwärtsbewegung des Werkzeugträgers (13, 13') zur Achse des Traggestells (9) in Drehung zu versetzen.

6. Vorrichtung nach einem der Ansprüche 4 oder 5, dadurch gekennzeichnet, daß die Mittel zum Anhalten der Vorwärtsbewegung des Werkzeugträgers (13, 13') gebildet sind durch ein mit dem Werkzeugträger (13) fest verbundenes Kontrollmittel (26), einen am Traggestell (9) befestigten Detektor (27) für die Position des Kontrollmittels (26) und Steuermittel zum Anhalten der Vorwärtsbewegung des Werkzeugträgers (13, 13'), wenn das Kontrollmittel (26) eine im voraus festgesetzte Position erreicht.

7. Vorrichtung nach Anspruch 6, dadurch gekennzeichnet, daß die Vorbewegungsmittel außerdem ein zusätzliches Kontrollmittel aufweisen, das sich gleichzeitig wie das mit dem Werkzeugträger (13) fest verbundene Kontrollmittel (26) in derselben Richtung, aber im entgegengesetzten Sinn zur Vorwärtsbewegung des Werkzeugträgers (13) vorwärtsbewegen kann, wobei der Detektor (27) zur Detektion der Position des zusätzlichen Kontrollmittels bestimmt ist.

8. Vorrichtung zur maschinellen Bearbeitung von Fasen an den freien Enden der Leitung, nach Anspruch 1,
dadurch gekennzeichnet, daß sie umfaßt:
- ein Traggestell (28), das mit Mitteln (29) zum Zentrieren und Arretieren von diesem im Inneren der Leitung (1) auf solche Weise versehen ist, daß seine Achse sich mit derjenigen der Leitung (1) vereinigt,
- einen konzentrisch um das Traggestell (28) herum angebrachten Werkzeugträger (35), der in Translation längs der Achse des Traggestells (28) und in Rotation um die Achse des Traggestells (28) herum beweglich ist,
- Mittel (45) zum Verstellen des Werkzeugträgers (35) in Translation längs der Achse des Traggestells (28),
- Mittel (42), um den Werkzeugträger (35) um die Achse des Traggestells (28) in Drehung zu versetzen,
- Mittel (24) zum Lokalisieren der Position des Traggestells (28) längs der Achse der Leitung (1),
- Mittel (50) zum Lokalisieren der Position des Werkzeugträgers (35) längs der Achse des Traggestells (28).

9. Vorrichtung nach Anspruch 8, dadurch gekennzeichnet, daß sie ein Gefäß (54) zum Wiedergewinnen der Abfälle umfaßt, das dazu bestimmt ist, im Inneren der Leitung (1) zentriert und arretiert zu werden und außerdem einen Tiefenanschlag für das untere Ende des Traggestells (28) zu bilden.

10. Vorrichtung zur Steuerung der Position und der Geometrie der Klötze, nach Anspruch 1,
dadurch gekennzeichnet, daß sie umfaßt:
- ein Traggestell (66), das mit Mitteln (67) zu seinem Zentrieren und Arretieren im Inneren der Leitung (1) versehen ist derart, daß sich seine Achse mit der Achse der Leitung (1) vereinigt, und von einem Längskanal durchbohrt ist,
- einen Träger (71), der im Kanal derart angeordnet ist, daß sich seine Achse mit der Achse des Traggestells (67) vereinigt, und in der Lage ist, sich im Inneren des Traggestells (67) längs dessen Achse zu verstellen und in Rotation um seine Achse beweglich ist,
- einen am Ende des Trägers angeordneten Fühler (83), der in der Lage ist, sich in Translation in bezug auf den Träger (67) senkrecht zur Achse des Trägers (67) im Kontakt mit den Klötzen (6) zur Steuerung gegen eine Feder (86) zu verstellen,
- Mittel (77) zum Verstellen des Trägers (71) in Translation längs dessen Achse derart, daß sich der Fühler (83) längs der gesamten Höhe der Klötze (6) verstellen kann,
- Mittel (77), um den Träger (71) um dessen Achse derart in Drehung zu versetzen, daß der Fühler (83) sich längs des gesamten Umfangs der Leitung (1) verstellen kann,
- Mittel (79) zum Lokalisieren der Position des Trägers (71) längs dessen Achse jeden Augenblick,
- Mittel (79) zum Lokalisieren der Winkelposition des Trägers (71) jeden Augenblick,
- Mittel (84-87) zum Lokalisieren der Position des Fühlers (83) längs dessen Verstellachse jeden Augenblick.

11. Vorrichtung nach Anspruch 10, dadurch gekennzeichnet, daß der Träger (71) von einem Längskanal durchbohrt ist, daß der Fühler durch eine Kugel (83) gebildet ist, die in der Lage ist, sich im Kontakt mit den Klötzen (6) in einer am Ende des Trägers (71) senkrecht zu dessen Achse durchbohrten Bohrung zu verstellen, und daß die Mittel zum Lokalisieren der Position der Kugel (83) jeden Augenblick gebildet sind:
- durch eine Stange (84), die im Inneren des Kanals angeordnet ist und sich im Inneren des Kanals verschieben kann,
- durch eine parabolische, fest mit dem Ende der Stange (84) verbundene Klappe (85),
- durch eine Feder (86) zum Befestigen der Klappe (85) gegen die Kugel (83),
- durch einen Aufnehmer (87), der am oberen Ende der Stange (84) angeordnet ist, um die Position der Stange (84) längs deren Achse zu lokalisieren.

12. Vorrichtung nach einem der Ansprüche 10 oder 11, dadurch gekennzeichnet, daß die Mittel zum Indrehungversetzen des Trägers (71) um dessen Achse in gleicher Weise die Mittel zum Verstellen des Trägers (71) längs dessen Achse bilden, wobei der Träger (71) ein Außengewinde auf einem Teil (h) seiner Länge aufweist, der einem Innengewinde (80) auf dem Traggestell entspricht.

13. Vorrichtung zur Entfernung des Schweißwulstes nach Anspruch 2,
dadurch gekennzeichnet, daß sie umfaßt:
- ein Traggestell (90), das dazu bestimmt ist, um eine Leitung (1) auf solche Weise befestigt zu werden, daß sich seine Achse mit der Achse der Leitung (1) vereinigt,

- einen Werkzeugträger (105), der auf dem Traggestell (90) auf solche Weise angebracht ist, daß sich seine Achse mit der Achse des Traggestells (90) vereinigt, beweglich in Translation längs seiner Achse und in Rotation um seine Achse,

- Mittel (97) zum Verstellen des Werkzeugträgers (105) längs seiner Achse,

- Mittel (102), um den Werkzeugträger um seine Achse in Drehung zu versetzen,

- einen Werkzeughalter (109), der auf dem Werkzeugträger (105) angebracht ist und in Translation in bezug auf diesen längs einer Achse senkrecht zur Achse des Werkzeugträgers (105) beweglich ist,

- Mittel (113, 114) zum Verstellen des Werkzeughalters (109) längs dessen Verstellachse,

- Mittel zum Lokalisieren der Verstellungen des Werkzeugträgers (105) längs dessen Achse,

- Mittel zum Lokalisieren der Verstellungen des Werkzeughalters (109) längs dessen Verstellachse,

- Mittel (116) zum Wiedergewinnen der maschinellen Bearbeitungsabfälle des Schweißwulstes (147), die dazu bestimmt sind, stromabwärts des Schweißwulstes (147) angeordnet zu sein.

14. Vorrichtung nach Anspruch 13, dadurch gekennzeichnet, daß die Mittel zum Wiedergewinnen der Abfälle durch einen aufblasbaren, umgekehrten Schirm aus Gummi (116) gebildet sind.

15. Vorrichtung nach Anspruch 14, dadurch gekennzeichnet, daß der Schirm (116) durch einen rohrförmigen Träger (118, 118') getragen ist, versehen mit Mitteln (120, 120'), um diesen im Inneren der Hülse (5) zu zentrieren, und durchbohrt von einem Kanal zum Aufblasen des Schirms (116).

16. Vorrichtung nach Anspruch 15, dadurch gekennzeichnet, daß sie eine Stange (130) koaxial zum rohrförmigen Träger (118, 118') umfaßt, die in der Lage ist, sich im Inneren von diesem zu verschieben, und deren eines Ende auf dem Boden (133) einer Aufnahmehülse (134) derart befestigt ist, daß der Schirm (116) in der Aufnahmehülse (134) vor seinem Herausziehen aus der Leitung (1) umklappen kann.

**Claims**

1. Process of replacing a sleeve mounted within a pipe, welded to the internal wall of the pipe at one of its ends, and kept spaced from the internal wall of the pipe by blocks at the other end, characterized in that,

- a pair of cross cuts is made in the pipe (1, 1'), one at least of these two cross cuts being made uptstream of the weld (5a, 5'a) of the sleeve (5, 5') to the pipe (1, 1'),

- the section thus obtained and the sleeve (5', 5') are withdrawn,

- chamfers are machined on the free ends of the pipe (1, 1'),

- the position and the geometry of the blocks (6, 6') are checked,

- welding into the gap in the pipe (1, 1') a new section, onto the internal wall of which one of the ends of a new sleeve (5, 5') has previously been welded, the latter having machined in accordance with the position and the geometry of the blocks (6, 6'), so that there is minimum play between the blocks (6, 6') and the free end of the sleeve (5, 5').

2. Process according to claim 1, characterized in that the two cross cuts are made upstream of the well of the sleeve (5) onto the pipe (1), and, after withdrawal of the section and before withdrawal of the sleeve (5), the line of welding of the sleeve (5) onto the pipe (1) is removed.

3. Process according to claim 1 or claim 2, characterized in that each of the cross cuts is made in two operations, with removal of material, then by displacement of the material, so as to avoid penetration of debris into the interior of the pipe (1, 1') during opening up.

4. Device for performing the cross cutting operation with removal of material as claimed in claim 3, wherein there are:

- a frame (9) in two parts (10, 10') intended to be fixed around the external wall of the pipe (1) in such a way that its axis coincides with the axis of the pipe (1),

- a rotating part (11) in two parts (12, 12'), carried by the parts (10, 10') of the frame (9), rotatable about the axis of the frame (9),

- at least one support (13, 13') for a cross cutting tool (14, 14') carried by the rotating part (11) but capable of translation towards the axis of the frame (9),

- means (18, 17, 16) for turning the rotating parts (11) about the axis of the frame (9),

- means (19, 19') for feeding the tool support (13, 13') towards the axis of the frame (9),

- means (26, 27) for stopping the feeding movement of the tool support (13, 13') before the tool (14, 14') can break into the interior of the pipe (1).

5. Device according to claim 4, characterized in that the means for feeding the tool support (13, 13') are constituted by :

- a worm (19) capable of being driven in rotation by a fork (22), the free end of which has a roller (24) capable of moving on a circular track (25) on the frame (9),

- means placed on the said track to raise the roller (24) at each revolution made by the rotating part (11),

- means (23) for turning the worm (19) in a single direction corresponding to feed of the tool support (13, 13') towards the axis of the frame (9).

6. Device according to one of claims 4 or 5, characterized in that the means for stopping the feeding movement of the tool support (13, 13') are constituted by an indicator (26) fixed to the tool support (13), a detector (27) of the position of the indicator (26), fixed to the frame (9), and means for controlling the stopping of the feeding movement of the tool support (13, 13') when the indicator (26) reaches a predetermined position.

7. Device according to claim 6, characterized in that the said feeding means include furthermore an auxiliary indicator capable of advancing at the same time as the indicator (26) fixed to the tool support (13), along the same line but in the direction opposite to the direction of advance of the tool support (13), the detector (27) being intended to detect the position of the auxiliary indicator.

8. Device for machining chamfers on the free ends of the pipe, according to claim 1, characterized in that it comprises:
- a frame (28) having means (29) for centering and fixing it in the interior of the pipe (1) in such a way that its axis coincides with that of the pipe (1),
- a tool support (35) mounted concentrically aroud the frame (28) capable of translation along the axis of the frame (28) and rotation about the axis of the frame (28),
- means (45) for causing translation of the tool support (35) along the axis of the frame (28),
- means (42) for turning the tool support (35) about the axis of the frame (28),
- means (34) for detecting the position of the frame (28) along the axis of the pipe (1),
- means (50) for detecting the position of the tool support (35) along the axis of the frame (28).

9. Device according to claim 8, characterized in that it comprises a cup (54) for recovery of debris intended to be centered and fixed in the interior of the pipe (1) and to constitute also a depth stop for the lower end of the frame (28).

10. Device for checking the position and the geometry of the blocks, according to claim 1, characterized in that it comprises:
- a frame (66) having means (67) for centering and fixing the latter in the interior of the pipe (1) in such a way that its axis coincides with the axis of the pipe (1), and traversed by a longitudinal passage,
- a support (71) placed in the said passage in such a way that its axis coincides with the axis of the frame (67), movable within the frame (67) along its axis, and rotatable about its axis,
- a feeler (83) at the end of the support, capable of translation relative to the support (67) perpendicularly to the axis of the support (67), against the blocks (6) to be checked upon contact with a spring (86),
- means (77) for causing translation of the support (71) along its axis in such a way that the feeler (83) can move along the entire height of the blocks (6),
- means (77) for turning the support (71) about its axis in such a way that the feeler (83) can move along the entire circumference of the pipe (1),
- means (79) for detecting the position of the support (71) along its axis at each moment,
- means (79) for detecting the angular position of the support (71) at each moment,
- means (84-87) for detecting the position of the feeler (83) along its axis of displacement at each moment.

11. Device according to claim 10, characterized in that the support (71) is traversed by a longitudinal passage, the feeler is constituted by a ball (83) which can be displaced on contact with the blocks (6) in a bore made in the end of the support (71) perpendicularly to the axis of the latter, and the means for detecting the position of the ball (83) at each moment are constituted by:
- a steam (84) within the passage and slidable in the interior of the passage,
- a parabolic vane (85) fixed to the end of the stem (84),
- a spring (86) for urging the vane (85) against the ball (83),
- a sensor (87) at the upper end of the stem (84) for detecting the position of the stem (84) along its axis.

12. Device according to one of claims 10 or 11, characterized in that the means for turning the support (71) about its axis also constitute the means for moving the support (71) along its axis, the support (71) including an external thread over a part h of its length, to which corresponds an internal thread (80) on the frame.

13. Device for removing the line of welding according to claim 2, characterized in that it comprises:
- a frame (90) intended to be fixed around the pipe (1) in such a way that its axis coincides with the axis of the pipe (1),
- a tool support (105) mounted on the frame (90) in such a way that its axis coincides with the axis of the frame (90), capable of translation along its axis and or rotation about its axis,
- means (97) for moving the tool support (105) along its axis,
- means (102) for turning the tool support about its axis,
- a tool holder (109) mounted on the tool support (105) and capable of translation relative to the latter along an axis perpendicular to the axis of the tool support (105),
- means (113, 114) for moving the tool holder (109) along its displacement axis,
- means for detecting the displacement of the tool support (105) along its axis,
- means (116) for detecting the displacement of the tool holder (109) along its displacement axis,
- means (116) for recovery of debris from machining of the line of welding (147), intended to be placed downstream of the line of welding (147).

14. Device according to claim 13, characterized in that the means for recovery of debris are constituted by an inverted umbrella of inflatable rubber (116).

15. Device according to claim 14, characterized in that the umbrella (116) is carried by a tubular support (118, 118') having means (120, 120') for centering the latter in the interior of the sleeve (5) and traversed by a passage for inflation of the umbrella (116).

16. Device according to claim 15, characterized in that it comprises a stem (130), coaxial with the tubular support (118, 118'), slidable in the interior of the latter, and having one of its ends fixed to the bottom (133) of a casing (134) in such a way that the umbrella (116) can fold up into the casing (134) before withdrawal from the pipe (1).

Fig 2

Fig 1

**Fig 3**

0 158 544

# Fig 4a

## Fig 4b

Fig 5

0 158 544

Fig 6a

Fig 6b

**Fig 6c**

137

140

136

142

141

118'

130

135